## Europäisches Patentamt
## European Patent Office
## Office européen des brevets

(19)

(11) Numéro de publication : **0 340 062 B1**

(12)

# FASCICULE DE BREVET EUROPEEN

(45) Date de publication du fascicule du brevet :
**12.06.91 Bulletin 91/24**

(51) Int. Cl.⁵ : **B60K 15/04**, B60K 15/035,
F16K 17/36

(21) Numéro de dépôt : **89400961.2**

(22) Date de dépôt : **07.04.89**

(54) **Dispositif de limitation de remplissage d'un réservoir de carburant et véhicule automobile équipé d'un tel réservoir.**

(30) Priorité : **27.04.88 FR 8805585**

(43) Date de publication de la demande :
**02.11.89 Bulletin 89/44**

(45) Mention de la délivrance du brevet :
**12.06.91 Bulletin 91/24**

(84) Etats contractants désignés :
**DE ES GB IT**

(56) Documents cités :
**EP-A- 0 223 051
FR-A- 2 581 597
FR-A- 2 598 981
GB-A- 1 241 070
US-A- 4 044 913
US-A- 4 659 346**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Mykieta, Yaroslaw**
**5, Avenue Claude Debussy**
**F-92230 Gennevilliers (FR)**

(74) Mandataire : **Fabien, Henri et al**
**PEUGEOT SA. Propriété Industrielle 18, rue**
**des Fauvelles**
**F-92250 La Garenne-Colombes (FR)**

Jouve, 18, rue Saint-Denis, 75001 PARIS

## Description

L'invention a pour objet un dispositif de limitation de remplissage d'un réservoir de carburant, notamment pour les véhicules automobiles, destiné à éviter que du carburant ne pénètre dans le volume d'expansion du réservoir pendant le remplissage de celui-ci.

Il est nécessaire de prévoir un volume d'expansion à la partie supérieure des réservoirs de carburant afin de permettre au liquide contenu dans le réservoir de se dilater sans risque de débordement, par exemple en cas d'élévation de la température, et sans risquer de créer des tensions excessives dans les parois du réservoir. De plus, on prévoit généralement un circuit de mise à l'air permettant l'évacuation dans l'atmosphère d'une partie des gaz contenus dans le volume d'expansion en cas de surpression. Cette surpression peut être dûe à la dilatation des gaz sous l'effet de la chaleur, à leur compression sous l'effet de la dilatation du carburant ou à l'évaporation de celui-ci.

Pour éviter que du carburant ne pénètre dans le volume d'expansion pendant le remplissage, on utilise habituellement des dispositifs qui obturent le circuit de mise à l'air lorsque le bouchon de remplissage ou la trappe prévue dans la carrosserie du véhicule est ouvert. Ainsi, en fin de remplissage, la pression des gaz contenus dans le volume d'expansion est supérieure à la pression atmosphérique et le niveau de liquide dans la tubulure de remplissage est plus élevé que dans le réservoir, indiquant que celui-ci est plein.

Enfin, il est nécessaire de prévoir encore d'autres dispositifs pour assurer la sécurité, par example pour empêcher l'écoulement du carburant par le circuit de mise à l'air en cas de renversement du véhicule. Le réservoir de carburant et ses appareils annexes constituent donc un ensemble compliqué dont la réalisation et le montage augmentent le coût de fabrication du véhicule.

L'invention remédie à ces inconvénients en proposant un dispositif de limitation de remplissage d'un réservoir de carburant, notamment pour véhicule automobile, qui permet de diminuer le nombre d'éléments liés au réservoir.

Le dispositif de l'invention s'applique à un réservoir ayant une partie supérieure dans laquelle est ménagé un volume d'expansion communiquant avec l'extérieur par un circuit de mise à l'air et une partie inférieure dans laquelle débouche l'extrémité inférieure d'une tubulure de remplissage dont l'extrémité supérieure est située au voisinage d'une trappe ménagée dans la carrosserie du véhicule et mobile entre une position fermée et une position ouverte.

De manière connue, ce dispositif comporte des moyens d'obturation du circuit de mise à l'air commandés par la trappe et obturant le circuit de mise à l'air lorsque cette dernière est en position ouverte ;

selon l'invention, ces moyens d'obturation sont agencés pour obturer automatiquement le circuit de mise à l'air en cas de retournement du véhicule.

La réalisation de celui-ci se trouve donc simplifiée puisque c'est le même dispositif, commandé par la trappe, qui assure les deux fonctions d'obturation du circuit de mise à l'air pendant le remplissage du réservoir et d'empêcher l'écoulement du carburant en cas de retournement accidentel du véhicule.

Selon une autre caractéristique du dispositif objet de l'invention, les moyens d'obturation comprennent:
– un boîtier ayant un orifice d'entrée le mettant en communication avec le volume d'expansion et un orifice de sortie le mettant en communication avec l'extérieur,
– un clapet, mobile à l'intérieur de ce boîtier entre une position de repos dans laquelle il n'obture aucun desdits orifices et une position de travail dans laquelle il obture l'un au moins de ces orifices, et
– des moyens pour déplacer le clapet entre sa position de repos et sa position de travail.

Dans le mode de réalisation préféré, au moins une partie du clapet est en un matériau magnétique et les moyens pour déplacer le clapet comprennent un aimant fixé sur un support d'aimant monté sur la structure du véhicule, ce support étant déplaçable, sous l'action de la trappe, entre une position de repos lorsque la trappe est en position fermée et une position de travail lorsque la trappe est en position ouverte, l'aimant étant placé de manière à attirer le clapet en position de travail lorsque le support d'aimant est lui-même en position de travail.

Toujours dans le mode de réalisation préféré, l'orifice d'entrée se trouve à la partie inférieure du boîtier et l'orifice de sortie à sa partie supérieure et le clapet comprend :
– un support fixé à l'intérieur du boîtier et ayant une face supérieure concave,
– une bille en matériau magnétique reposant sur la face supérieure du support,
– une pièce en forme de cloche qui recouvre la bille, et
– un bossage sur la face supérieure de cette pièce, les dimensions de ces différents éléments étant telles qu'un déplacement latéral de la bille entraîne le soulèvement de la pièce en forme de cloche et l'obturation de l'orifice de sortie par ledit bossage.

Ainsi, l'aimant étant placé à l'extérieur du boîtier, il attire la bille lorsqu'on l'approche d'une paroi latérale de celui-ci. La bille se déplace vers le haut à cause de la concavité de la face supérieure du support et pousse la pièce en forme de cloche vers le haut du boîtier pour que le bossage pénètre dans l'orifice de sortie et en provoque l'obturation. Le boîtier est de préférence cylindrique d'axe vertical et les dimensions extérieures de la pièce en forme de cloche sont voisines des dimensions intérieures du boîtier afin que cette pièce ne puisse effectuer que des mouvements de translation suivant l'axe du boîtier. Lorsque le véhicule est en position horizontale, le fonctionnement est celui indiqué ci-dessus. Si le véhicule prend une certaine inclinaison, la bille roule sur la face supérieure du support et pousse la pièce en forme de cloche vers l'orifice de sortie : on comprend donc qu'à partir d'une certaine inclinaison, le déplacement de cette pièce est suffisant pour obturer l'orifice de sortie et empêcher l'écoulement du carburant par le circuit de mise à l'air.

Dans le mode de réalisation préféré, le support d'aimant comprend :

- un corps monté sur la structure du véhicule et mobile en rotation par rapport à celle-ci,
- un bras solidaire de ce corps en rotation et sur lequel est fixé l'aimant, et
- des moyens de mise en rotation de ce corps sous l'action de la trappe.

Ces moyens de mise en rotation comprennent une tige rigide solidaire du corps en rotation, une partie de la trappe venant en contact avec cette tige et la déplaçant lorsque la trappe passe de la position fermée à la position ouverte.

On peut également prévoir des moyens de rappel du support d'aimant en position de repos.

Dans un premier mode de réalisation, le bras est de forme allongée et porte l'aimant à son extrémité la plus éloignée de l'axe de rotation du corps : l'aimant tend à ramener le bras en position verticale par gravité, constituant ainsi les moyens de rappel.

Dans un deuxième mode de réalisation, les moyens de rappel comprennent un ressort ayant une première extrémité fixée à la structure du véhicule et une deuxième extrémité fixée audit bras.

Bien entendu, le ressort peut également être utilisé dans le premier mode de réalisation afin d'assurer un retour plus sûr et plus rapide en position de repos.

Enfin, l'invention a encore pour objet un véhicule automobile équipé d'un dispositif de limitation de remplissage du réservoir de carburant tel que décrit ci-dessus.

D'autres caractéristiques et avantages de l'invention ressortiront de la description ci-après, donnée à titre d'exemple non limitatif, en référence aux dessins annexés, dans lesquels :

- la Figure 1 est une vue schématique en coupe d'un réservoir de carburant de véhicule automobile équipé d'un dispositif conforme à l'invention,
- la Figure 2 est une vue schématique en perspective montrant comment la trappe agit sur le support d'aimant, et
- les Figures 3a et 3b sont des vues schématiques en coupe verticale montrant le support d'aimant et le boîtier du clapet en position de repos et en position de travail respectivement.

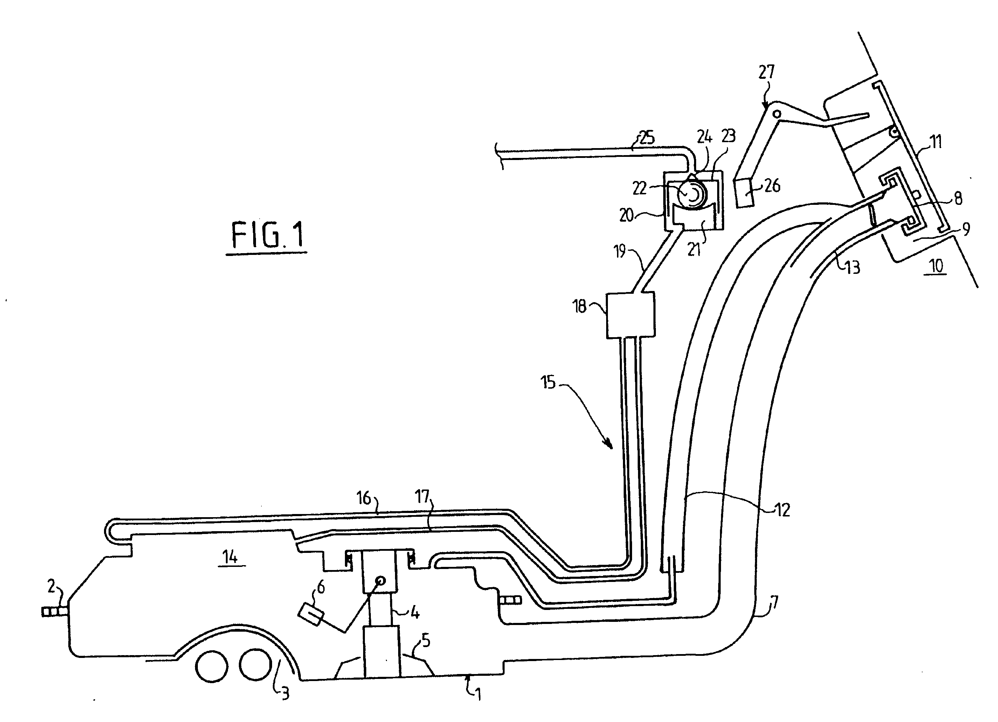

Si l'on se reporte à la Figure 1, on voit le réservoir de carburant 1 d'un véhicule automobile fixé à la structure du véhicule, par exemple par des pattes de fixation 2. Un tel réservoir peut avoir une forme complexe car on cherche à avoir le maximum de volume pour le carburant en fonction de l'espace disponible entre différents éléments, comme par exemple le passage du pot d'échappement 3. A l'intérieur du réservoir est montée une pompe d'aspiration 4 dont la partie inférieure est entourée d'un piège à carburant 5 prévu sur le fond du réservoir. On peut voir également sur la Figure 1 une jauge 6 qui, dans l'exemple représenté ici, est constituée par un flotteur fixé à l'extrémité d'un levier monté sur la pompe 4 et mobile en rotation autour d'un axe horizontal.

Une tubulure de remplissage 7 débouche à la partie inférieure du réservoir par une de ses extrémités tandis que son autre extrémité est fermée par un bouchon amovible 8. Celle-ci se trouve dans un logement 9, prévu dans la carrosserie 10 du véhicule, ce logement pouvant être fermé par une trappe mobile 11.

Pour permettre l'évacuation du gaz présent dans le réservoir pendant le remplissage de celui-ci, on a prévu un tube de dégazage 12 reliant la partie supérieure du réservoir à la partie supérieure de la tubulure de remplissage. Un déflecteur 13 est monté au voisinage de l'extrémité supérieure de la tubulure 7 pour empêcher l'introduction de carburant dans le tube de dégazage 12.

Afin de permettre la dilatation et/ou l'évaporation du carburant contenu dans le réservoir, on a ménagé à la partie supérieure de celui-ci un volume d'expansion 14. Un circuit de mise à l'air 15 relie le volume d'expansion 14 à l'extérieur pour permettre l'évacuation du gaz contenu dans celui-ci en cas de surpression. Dans l'exemple décrit ici, le circuit 15 comprend d'abord deux tubes de mise à l'air 16 et 17 dont une première extrémité débouche dans le volume d'expansion 14 tandis que leur autre extrémité débouche à la partie inférieure d'une capacité de mise à l'air libre 18. Le rôle de cette capacité 18 est de permettre la séparation des gouttes de carburant qui auraient pu être entraînées avec le gaz dans les tubes 16 et 17 ou la condensation d'une partie des vapeurs, et le retour du liquide dans le réservoir. La capacité de mise à l'air libre 18 peut avoir par exemple un volume de 0,5 litre pour un diamètre intérieur des tubes 16 et 17 de 3,5 mm et un volume utile du réservoir de 80 litres, le volume d'expansion étant d'environ 6 litres. Bien entendu, la partie inférieure de la capacité 18 doit se trouver au dessus de la partie supérieure du réservoir.

Dans le cas particulier décrit ici, on a prévu deux tubes 16 et 17 qui débouchent respectivement à deux extrémités opposées du volume d'expansion 14 afin que les gaz puissent toujours être évacués : ainsi, même si le véhicule penche d'un côté, provoquant l'entrée de liquide dans l'un des tubes, l'autre tube débouchera toujours au niveau de la poche de gaz.

Un tube 19 relie la partie supérieure de la capacité 18 à la partie inférieure d'un boîtier 20 situé au-dessus de la capacité 18 et placé au voisinage de la trappe et qui contient un clapet à bille. Ce dernier se compose d'un support 21, fixé au boîtier, ayant une face supérieure concave sur laquelle repose librement une bille 22 en matériau magnétique. Celle-ci est surmontée d'une pièce en forme de cloche 23 qui comporte un bossage 24 sur sa face supérieure. Ce bossage a une forme telle qu'il puisse obturer un orifice de sortie prévu à la partie supérieure du boîtier 20. Cet orifice est le point de départ d'un tube 25 qui met le boîtier 20 en communication avec l'extérieur ou avec un dispositif tel qu'un canister par exemple. La bille 22 peut être par exemple en acier, et le boîtier 20, ainsi que le support 21, la pièce 23 et les tubes 19 et 25, en matière plastique.

Le clapet est commandé par un aimant 26 monté sur un support d'aimant 27 lui-même commandé par le mouvement d'ouverture de la trappe 11.

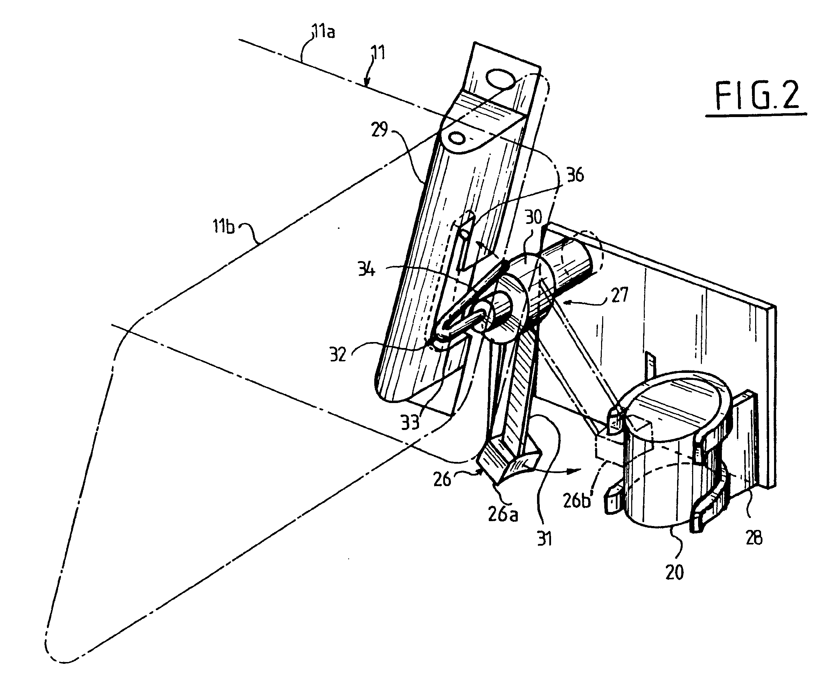

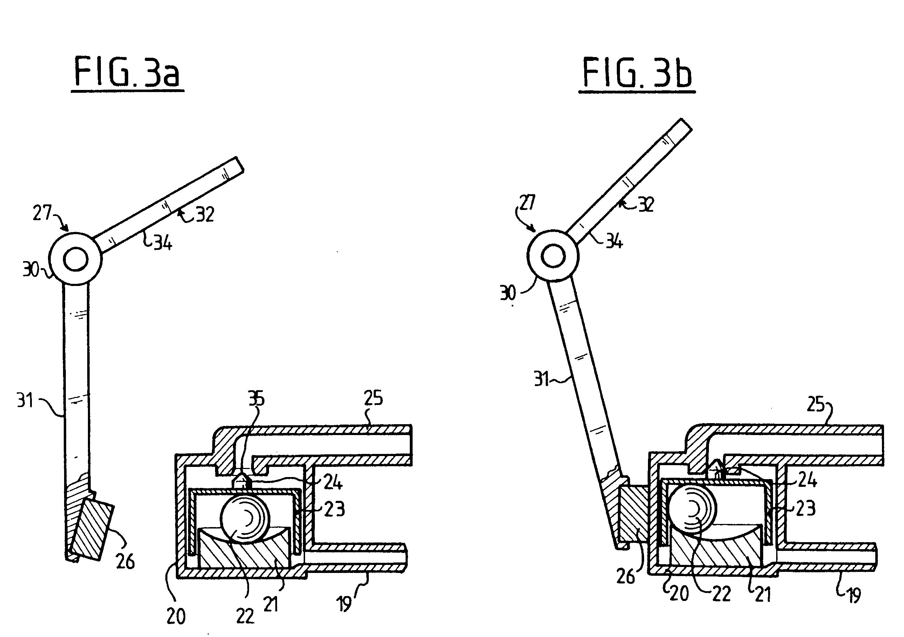

Le fonctionnement du clapet va maintenant être décrit plus en détail en référence aux Figures 2, 3a et 3b.

Sur la Figure 2, on retrouve le boîtier 20 fixé à la structure du véhicule, par exemple à l'aide d'un support 28. On retrouve aussi la trappe 11 montée à rotation sur un support 29 également fixé à la structure du véhicule. La trappe est mobile autour d'un axe de rotation sensiblement vertical entre une position de fermeture 11a représentée en traits mixtes et une position d'ouverture 11b également représentée en traits mixtes.

Dans le mode de réalisation préféré décrit ici, le support d'aimant 27 se compose essentiellement d'un corps cylindrique 30 monté sur la structure du véhicule et mobile librement en rotation autour de son axe qui est sensiblement horizontal. Sur le corps 30 est monté rigidement un bras 31 qui porte l'aimant 26 à son extrémité la plus éloignée du corps 30. Une tige rigide 32 solidaire du corps 30 en rotation présente une première partie 33 dont l'axe est confondu avec celui du corps 30, puis se recourbe et présente une deuxième partie 34 dirigée vers le haut.

Lorsque la trappe est fermée (position 11a), elle n'est pas en contact avec la tige 32 et le poids de l'aimant 26 ramène le bras 31 en position verticale (Figure 3a). Dans cette position, l'aimant 26 est éloigné de la bille 22 et ne l'attire pas. La bille se place donc naturellement au point le plus bas de la face supérieure du support 21. La pièce en forme de cloche 23 est alors en position basse et le bossage 24 n'obture pas l'orifice de sortie 35 prévu à la partie supérieure du boîtier 20 : les gaz peuvent donc passer du tube 19 au tube 25.

Lorsqu'on ouvre la trappe, au cours de son mouvement de rotation pour passer de la position 11a à la position 11b, celle-ci vient en contact avec la partie 34 de la tige 32. Comme cette dernière est solidaire en rotation du corps 30 et que celui-ci n'est mobile qu'en rotation par rapport à la structure du véhicule, le mouvement de la trappe entraîne le pivotement de la tige 32 et donc la rotation du corps 30 et du bras 31. L'aimant 26 passe donc de la position 26a représentée en traits pleins sur la Figure 2 et dans laquelle il est éloigné du boîtier 20 à la position 26b représentée en traits mixtes et dans laquelle il est en contact avec la face externe de la paroi du boîtier 20. Eventuellement, on peut prévoir, dans le support 29, un logement 36 dans lequel la partie 34 de la tige vient se placer lorsque la trappe est ouverte.

La position de travail du support d'aimant est illustrée à la Figure 3b. Par rapport à la position de la Figure 3a, il a pivoté en sens contraire des aiguilles d'une montre et l'aimant 26 est en contact avec la paroi latérale du boîtier 20. Il attire donc la bille 22 qui se déplace latéralement. Au cours de ce déplacement, celle-ci se soulève puisque la face supérieure du support 21 est concave et a ses bords situés plus haut que le centre. Ceci a pour effet de soulever la pièce en forme de cloche 23 et le bossage 24 vient obturer l'orifice 35.

Il est à noter que le boîtier 20 est de préférence cylindrique et d'axe vertical et le diamètre extérieur de la pièce 23 est légèrement inférieur au diamètre interne du boîtier. Ainsi, la pièce 23 ne peut se déplacer qu'en translation suivant l'axe du cylindre et on est sûr que le bossage 24 viendra obturer l'orifice 35 à chaque soulèvement de la pièce 23.

Lorsqu'on referme la trappe après avoir rempli le réservoir et remis en place le bouchon 8, la tige 32 est à nouveau libre de se déplacer et le poids de l'aimant ramène le bras 31 en position verticale, ce qui correspond à la position de repos illustrée à la Figure 3a.

Eventuellement, on peut prévoir un moyen élastique tel qu'un ressort (non représenté) fixé d'une part à la structure du véhicule et d'autre part au bras 31 pour ramener celui-ci de manière sûre en position de repos lorsque la trappe est fermée. En effet, le mouvement de rotation du corps 30 peut être perturbé au bout d'un certain temps par des frottements, par l'usure ou la déformation de certaines pièces, etc...

En fonctionnement normal, c'est-à-dire lorsque le véhicule est en position horizontale, le fonctionnement du dispositif objet de l'invention est celui qui vient d'être décrit. Mais le boîtier 20 sert aussi à empêcher l'écoulement du carburant par le circuit de mise à l'air en cas de renversement ou de retournement du véhicule. En effet, si celui-ci prend une inclinaison excessive, comme le support 21 est fixe par rapport au boîtier 20, la bille roule pour atteindre le point le plus bas de la face supérieure du support, qui n'est plus le point central comme sur la Figure 3a. Ce mouvement entraîne donc le déplacement de la pièce 23 vers l'orifice 35 et l'obturation de celui-ci si l'inclinaison du véhicule dépasse une certaine valeur. Il en est de même si le véhicule se renverse, la bille quittant alors le support 21 et poussant la pièce 23 par gravité.

Ainsi, l'invention présente des avantages particulièrement intéressants puisque c'est le même dispositif, commandé par la trappe, qui assure l'obturation du circuit de mise à l'air pendant que la trappe est ouverte et empêche l'écoulement du carburant par le circuit de mise à l'air en cas de renversement du véhicule : la construction de celui-ci s'en trouve simplifiée et son coût de fabrication diminué.

**Revendications**

1. Dispositif de limitation de remplissage d'un réservoir (1) de carburant, notamment pour véhicule automobile, un volume d'expansion (14) communiquant avec l'extérieur par un circuit de mise à l'air (15) etant ménagé à la partie supérieure de ce réservoir (1), le dispositif comprenant un clapet mobile entre une position de repos dans laquelle il n'obture pas le circuit de mise à l'air (15) et une position de travail dans laquelle il l'obture, ainsi que des moyens pour déplacer le clapet entre ces deux positions, caractérisé en ce que le clapet a au moins une partie en matériau magnétique et en ce que les moyens pour le déplacer sont des moyens magnétiques.

2. Dispositif selon la revendication 1, caractérisé en ce que, le réservoir (1) étant équipé d'une tubulure de remplissage (7) débouchant au voisinage d'une trappe (11) prévue dans la carrosserie du véhicule et mobile entre une position fermée et une position ouverte, les moyens pour déplacer le clapet sont commandés par la trappe (11).

3. Dispositif selon la revendication 2, caractérisé en ce que les moyens pour déplacer le clapet comprennent un aimant (26) fixé sur un support d'aimant (27) monté sur la structure du véhicule, ce support (27) étant déplaçable, sous l'action de la trappe (11), entre une position de repos lorsque la trappe (11) est en position fermée et une position de travail lorsque la trappe (11) est en position ouverte, l'aimant (26) étant placé de manière à attirer le clapet en position de travail lorsque le support d'aimant (27) est lui-même en position de travail.

4. Dispositif selon l'une quelconque des revendications 1 à 3, caractérisé en ce que le clapet est logé à l'intérieur d'un boîtier (20) ayant un orifice d'entrée le mettant en communication avec le volume d'expansion (14) et un orifice de sortie le mettant en communication avec l'extérieur, le clapet étant mobile, à l'intérieur de ce boîtier (20), entre ladite position de repos dans laquelle il n'obture aucun de ces orifices et ladite position de travail dans laquelle il obture l'un au moins de ces orifices.

5. Dispositif selon la revendication 4, caractérisé en ce que l'orifice d'entrée se trouve à la partie inférieure du boîtier (20) et l'orifice de sortie à sa partie supérieure et en ce que le clapet comprend :
- un support (21) fixé à l'intérieur du boîtier (20) et ayant une face supérieure concave,
- une bille (22) en matériau magnétique reposant sur la face supérieure du support (21),
- une pièce en forme de cloche (23) qui recouvre la bille (22), et
- un bossage (24) sur la face supérieure de cette pièce (23),
les dimensions de ces différents éléments étant telles qu'un déplacement latéral de la bille (22) entraîne le soulèvement de la pièce en forme de cloche (23) et l'obturation de l'orifice de sortie par ledit bossage (24).

6. Dispositif selon l'une quelconque des revendications 3 à 5, caractérisé en ce que le support d'aimant (27) comprend :
- un corps (30) monté sur la structure du véhicule et mobile uniquement en rotation par rapport à celle-ci,
- un bras (31) solidaire de ce corps (30) en rotation et sur lequel est fixé l'aimant (26), et
- des moyens de mise en rotation de ce corps (30) sous l'action de la trappe (11).

7. Dispositif selon la revendication 6, caractérisé en ce que lesdits moyens de mise en rotation comprennent une tige rigide (32) solidaire du corps (30) en rotation, une partie de la trappe (11) venant en contact avec cette tige (32) et la déplaçant lorsque la trappe (11) passe de la position fermée à la position ouverte.

8. Dispositif selon l'une quelconque des revendications 6 et 7, caractérisé en ce qu'il comporte en outre des moyens de rappel du support d'aimant (27) en position de repos.

9. Dispositif selon la revendication 8, caractérisé en ce que le bras (31) est de forme allongée et porte l'aimant (26) à son extrémité la plus éloignée de l'axe de rotation du corps (30), l'aimant (26) tendant à ramener le bras (31) en position verticale par gravité, constituant ainsi lesdits moyens de rappel.

10. Dispositif selon l'une quelconque des revendications 8 et 9, caractérisé en ce que lesdits moyens de rappel comprennent un ressort ayant une première extrémité fixée à la structure du véhicule et une deuxième extrémité fixée audit bras (31).

**Ansprüche**

1. Füllbegrenzungsvorrichtung für einen Brennstofftank (1), insbesondere für ein Kraftfahrzeug, wobei ein Ausdehnungsraum (14) mit der Atmosphäre über eine Belüftungsschaltung (15) in Verbindung steht, die im oberen Abschnitt des Tanks (1) angeordnet ist, die Vorrichtung ein Sperrventil aufweist, das sich zwischen einer Ruhestellung, in der es die Belüftungsschaltung (15) nicht sperrt, und einer Arbeitsstellung bewegt, in der es die Schaltung sperrt, sowie Mittel zum Versetzen des Sperrventils zwischen diesen beiden Stellungen, **dadurch gekennzeichnet,** daß das Sperrventil mindestens ein Teil aus magnetischem Material hat und daß die Mittel zum Versetzen magnetische Mittel sind.

2. Vorrichtung nach Anspruch 1, **dadurch gekennzeichnet,** daß der Tank (1) mit einem Füllstutzen (7) ausgestattet ist, der in die Nähe eines Deckels (11) mündet, der in der Fahrzeugkarosserie vorgesehen und sich zwischen einer geschlossenen und einer offenen Lage bewegt, und daß bei diesem Tank die Mittel zum Versetzen des Sperrventils durch den Deckel (11) gesteuert werden.

3. Vorrichtung nach Anspruch 2, **dadurch gekennzeichnet,** daß die Mittel zum Versetzen des Sperrventils einen Magneten (26) aufweisen, der an einer Magnetstütze (27) befestigt ist, die am Fahrzeugrahmen angebracht ist, wobei diese Stütze (27) unter der Einwirkung des Deckels (11) zwischen einer Ruhelage, wenn der Deckel (11) geschlossen ist, und einer Arbeitslage versetzbar ist, wenn der Deckel (11) geöffnet ist, während der Magnet (26) so angeordnet ist, das Sperrventil in der Arbeitsstellung anzuziehen, wenn die Magnetstütze (27) selbst in Arbeitslage ist.

4. Vorrichtung nach einem der Ansprüche 1 bis 3, **dadurch gekennzeichnet,** daß das Sperrventil im Innern eines Behälters (20) angebracht ist, dessen Eingangsöffnung in Verbindung mit dem Ausdehnungsraum (14) und dessen Ausgangsöffnung in Verbindung mit der Atmosphäre steht, wobei das Sperrventil im Innern dieses Behälters (20) sich zwischen der Ruhestellung, in der es keine dieser Öffnungen verschließt, und der Arbeitsstellung bewegt, in der es wenigstens die eine dieser Öffnungen verschließt.

5. Vorrichtung nach Anspruch 4, **dadurch gekennzeichnet,** daß die Eingangsöffnung sich im unteren Abschnitt des Behälters (20) und die Ausgangsöffnung in dessen oberen Abschnitt befindet und daß das Sperrventil folgende Teile aufweist :
eine im Innern des Behälters (20) befestigte Stütze (21) mit einer oben konkaven Fläche,
eine auf der oberen Stützfläche (21) ruhende Kugel (22) aus magnetischem Material,
ein glockenförmiges Teil (23), das die Kugel (22) abdeckt, und
einen Höcker (24) auf der oberen Fläche dieses Teils (23), wobei die Abmessungen dieser verschiedenen Elemente so beschaffen sind, daß ein seitliches Versetzen der Kugel (22) das Anheben des glockenförmigen Teils (23) und das Verschließen der Ausgangsöffnung durch den Höcker (24) bedingt.

6. Vorrichtung nach einem der Ansprüche 3 bis 5, **dadurch gekennzeichnet,** daß die Magnetstütze (27) folgende Teile aufweist :
einen am Fahrzeugrahmen angebrachten und ausschließlich an diesem drehbaren Körper (30), einen in der Drehung mit dem Körper (30) einteiligen Arm (31), an dem der Magnet (26) fest angebracht ist, und
Mittel, diesen Körper (30) unter der Einwirkung des Deckels (11) in Drehung zu versetzen.

7. Vorrichtung nach Anspruch 6, **dadurch gekennzeichnet,** daß die Mittel, in Drehung zu versetzen, eine mit dem Körper (30) bei der Drehung einteilige steife Stange (32) aufweisen, wobei ein Abschnitt des Deckels (11) mit dieser Stange (32) in Berührung kommt und sie versetzt, wenn der Deckel (11) von seiner geschlossenen in seine offene Lage gelangt.

8. Vorrichtung nach Anspruch 6 oder 7, **dadurch gekennzeichnet,** daß sie außerdem Rückholmittel der Magnetstütze (27) in die Ruhelage aufweist.

9. Vorrichtung nach Anspruch 8, **dadurch gekennzeichnet,** daß der Arm (31) platt ist und an seinem vor der Drehachse des Körpers (30) entferntesten Ende den Magneten (26) trägt, wobei der Magnet (26) bestrebt ist, den Arm (31) durch Schwerkraft in eine vertikale Lage zurückzubringen, indem er so die Rückholmittel bildet.

10. Vorrichtung nach Anspruch 8 oder 9, **dadurch gekennzeichnet,** daß die Rückholmittel eine Feder aufweisen, deren erstes Ende am Fahrzeugrahmen und deren zweites Ende an dem Arm (31) befestigt ist.

**Claims**

1. A device for limiting the filling of a fuel tank (1), in particular for a motor vehicle, an expansion volume (14) communicating with the exterior by a circuit for venting to air (15) being arranged in the upper part of this tank (1), the device comprising a valve movable between the position of rest in which it does not shut off the circuit for venting to air (15) and an operating position in which it shuts it off, and also means to displace the valve between these two positions, characterized in that the valve has at least one part of magnetic material and in that the means for displacing it are magnetic means.

2. A device according to claim 1, characterized in that, with the tank (1) being equipped with a filling pipe (7) opening out in the vicinity of a flap (11) provided in the bodywork of the vehicle and movable between a closed position and an open position, the means for displacing the valve are controlled by the flap (11).

3. A device according to claim 2, characterized in that the means for displacing the valve comprise a magnet (26) fixed on a magnet support (27) mounted on the structure of the vehicle, this support (27) being displaceable, under the action of the flap (11), between a position of rest when the flap (11) is in a closed position and an operating position when the flap (11) is in an open position, the magnet (26) being placed so as to attract the valve into the operating position when the magnet support (27) is itself in operating position.

4. A device according to any one of claims 1 to 3, characterized in that the valve is housed inside a case (20) having an inlet opening putting it in communication with the expansion volume (14) and an outlet orifice putting it in communication with the exterior, the valve being movable, inside this casing (20), between said position of rest in which it does not shut off any of these openings and said operating position in which it shuts off at least one of these openings.

5. A device according to claim 4, characterized in that the inlet opening is in the lower part of the casing (20) and the outlet opening is in its upper part and in that the valve comprises :

    – a support (21) fixed inside the casing (20) and having a concave upper face,
    – a ball (22) of magnetic material resting on the upper face of the support (21),
    – a bell-shaped piece (23) which covers the ball (22), and
    – a boss (24) on the upper face of this piece (23),

the dimensions of these different elements being such that a lateral displacement of the ball (22) entrains the raising of the bell-shaped piece (23) and the shutting off of the outlet opening by said boss (24).

6. A device according to any one of claims 3 to 5, characterized in that the magnet support (27) comprises :

    – a body (30) mounted on the structure of the vehicle and movable solely in rotation in relation thereto,
    – an arm (31) integral with this body (30) in rotation and on which is fixed the magnet (26), and
    – means for setting this body (30) in rotation under the action of the flap (11).

7. A device according to claim 6, characterized in that said means for setting in rotation comprise a rigid rod (32) integral with the body (30) in rotation, with a part of the flap (11) coming into contact with said rod (32) and displacing it when the flap (11) passes from the closed position to the open position.

8. A device according to any one of claims 6 and 7, characterized in that it further comprises means for returning the magnet support (27) to a position of rest.

9. A device according to claim 8, characterized in that the arm (31) is of elongated shape and carries the magnet (26) at its end furthest from the axis of rotation of the body (30), the magnet (26) tending to return the arm (31) into vertical position by gravity, thus constituting said return means.

10. A device according to any one of claims 8 and 9, characterized in that said return means comprise a spring having a first end fixed to the structure of the vehicle and a second end fixed to said arm (31).

FIG.1

EP 0 340 062 B1

FIG.2

# FIG. 3a

# FIG. 3b

EP 0 340 062 B1